(19) Europäisches Patentamt / European Patent Office / Office européen des brevets

(11) **EP 3 272 495 B1**

(12) **FASCICULE DE BREVET EUROPEEN**

(45) Date de publication et mention
de la délivrance du brevet:
**03.07.2019 Bulletin 2019/27**

(51) Int Cl.:
*B29C 49/48* (2006.01)   *B29C 49/06* (2006.01)
*B29K 67/00* (2006.01)   *B29L 31/00* (2006.01)
*B29C 49/20* (2006.01)   *B29C 49/78* (2006.01)

(21) Numéro de dépôt: **17305963.5**

(22) Date de dépôt: **20.07.2017**

(54) **UNITE DE MOULAGE DE RECIPIENTS, EQUIPEE DE CIRCUITS FLUIDIQUE ET PNEUMATIQUE DEBOUCHANT SUR UNE FACE SUPERIEURE**

SPRITZGUSSEINHEIT FÜR BEHÄLTER, DIE MIT FLÜSSIGKEITS- UND PNEUMATIKKREISLÄUFEN AUSGESTATTET IST, DIE AUF DER OBEREN FLÄCHE EINMÜNDEN

CONTAINER MOULDING UNIT, PROVIDED WITH FLUID AND PNEUMATIC CIRCUITS LEADING ONTO AN UPPER SURFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2016 FR 1656948**

(43) Date de publication de la demande:
**24.01.2018 Bulletin 2018/04**

(73) Titulaire: **Sidel Participations**
**76930 Octeville-sur-Mer (FR)**

(72) Inventeur: **LEROUX, Marc**
**76930 Octeville-sur-mer (FR)**

(74) Mandataire: **Siloret, Patrick**
**Sidel Participations**
**Avenue de la Patrouille de France**
**CS60627 Octeville-sur-mer**
**76059 Le Havre Cedex (FR)**

(56) Documents cités:
**US-A1- 2014 263 160     US-A1- 2015 239 169**
**US-B2- 8 348 658     US-B2- 8 721 957**

**Description**

L'invention a trait au formage des récipients, notamment des bouteilles, des flacons ou encore des bidons, à partir d'ébauches en matière thermoplastique (tel que le polytéréphtalate d'éthylène ou PET), et plus particulièrement des récipients munis de réserves en creux telles que des poignées intégrées.

Rappelons que la fabrication des récipients comprend généralement une opération de soufflage qui se déroule dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, préalablement chauffée de manière à permettre sa déformation plastique.

Certains récipients peuvent être munis de réserves formées en creux vers l'intérieur du récipient et réalisées dans un but esthétique (par ex. création de galbes) ou fonctionnel (réalisation d'une poignée de préhension du récipient).

Pour y parvenir, on emploie généralement une unité de moulage munie d'un insert mobile initialement escamoté dans la paroi du moule et déployé en présence du récipient en cours de formation dans le moule pour repousser la matière lorsque celle-ci atteint la paroi, comme illustré dans la demande internationale WO 2010/063900 (Sidel Participations).

La technique décrite dans ce document, conçue pour un moule de type linéaire (qui comprend deux demi-moules montés en translation l'un par rapport à l'autre), est difficilement transposable aux moules de type portefeuille (dans lequel les demi-moules sont montés en rotation l'un par rapport à l'autre), en raison de l'encombrement important, notamment radial, de l'actionneur commandant le mouvement de l'insert.

L'actionneur étant généralement commandé de manière pneumatique (c'est-à-dire à l'aide d'un fluide sous pression), l'unité de moulage doit être conçue pour intégrer un circuit pneumatique de commande de l'actionneur et ménager de l'espace pour le branchement de raccords externes assurant l'alimentation en fluide du circuit pneumatique.

En outre, les moules doivent être régulés thermiquement, pour être maintenus soit à une température faible (typiquement de l'ordre de 10°C) de manière à refroidir le récipient - et donc figer - la matière du récipient en fin de formage, soit à une température élevée (typiquement de l'ordre de 140°C) de manière à assurer une thermofixation de la matière en fin de formage, permettant d'accroître sa cristallinité - et donc sa résistance mécanique.

La régulation thermique peut être assurée par un circuit électrique (dans le cas d'une température élevée). De manière plus courante, et typiquement dans le cas d'une température faible, la régulation thermique est assurée au moyen d'un circuit fluidique comprenant des canaux percés dans la paroi du moule, alimentés en fluide par des flexibles externes via des raccords fluidiques. Ces raccords sont en général branchés latéralement sur le moule, comme illustré dans le brevet européen EP 2 106 898 (Sidel Participations) ou son équivalent américain US 8 348 658. Des dispositifs similaires sont encore décrits dans les documents US8721957A2 et US2014/263160A1.

L'actionneur et les raccords augmentent l'encombrement radial de l'unité de moulage, et, en dépit de l'emploi de raccords rapides, rendent la maintenance complexe en raison des difficultés d'accès latéral au moule.

Un objectif est de proposer une unité de moulage de récipients équipée d'un circuit fluidique et d'un circuit pneumatique, ayant au moins l'une des qualités suivantes :

- meilleure compacité,
- utilisation plus facile,
- maintenance plus aisée.

A cet effet, il est proposé une unité de moulage pour le formage d'un récipient, qui comprend :

- un moule muni d'une paroi latérale définissant une cavité à l'empreinte d'une partie du récipient,
- un circuit fluidique de régulation thermique de la paroi, qui inclut des canaux percés dans celle-ci, ce circuit fluidique de régulation thermique s'étendant entre une ouverture d'alimentation et une ouverture d'évacuation ;
- un insert ayant une face frontale à l'empreinte d'une partie locale du récipient, mobile entre une position rétractée et une position déployée ;
- un actionneur solidaire de l'insert pour déplacer celui-ci de sa position rétractée à sa position déployée et réciproquement ;
- un circuit pneumatique de commande de l'actionneur ;

l'unité de moulage étant caractérisée en ce que :

- le circuit fluidique de régulation thermique de la paroi débouche, par l'ouverture d'alimentation et l'ouverture d'évacuation, sur une face supérieure du moule
- le circuit pneumatique de commande de l'actionneur comprend au moins un conduit primaire percé dans la paroi du moule et débouchant, par une extrémité amont, sur la face supérieure du moule.

De la sorte, les branchements fluidiques peuvent être effectués par la face supérieure du moule, au bénéfice de la facilité d'utilisation, de la facilité de maintenance, et d'une manière générale de la compacité de l'unité de moulage.

Diverses caractéristiques supplémentaires peuvent être prévues, seules ou en combinaison. Ainsi, par exemple :

- l'unité de moulage comprend un raccord fluidique monté sur la face supérieure du moule, ce raccord incluant une arrivée fluidique en communication avec l'ouverture d'alimentation et une sortie fluidique en communication avec l'ouverture d'évacuation ;
- le moule comprend une gorge creusée dans la face supérieure, qui s'étend d'une extrémité externe au droit de l'ouverture d'évacuation à une extrémité interne au voisinage de l'ouverture d'alimentation ;
- l'unité de moulage comprend un raccord pneumatique monté sur la paroi supérieure du moule, ce raccord incluant une arrivée primaire en communication avec l'extrémité amont du conduit primaire ;
- le circuit pneumatique de commande de l'actionneur comprend un conduit secondaire percé dans la paroi du moule et débouchant, par une extrémité amont, sur la face supérieure du moule ;
- le raccord pneumatique comprend une arrivée secondaire en communication avec l'extrémité amont du conduit secondaire ;
- l'arrivée primaire du raccord pneumatique est reliée à une source de fluide à pression élevée, et l'arrivée secondaire à une source de fluide à pression comparativement plus faible ;
- la pression élevée est supérieure à 20 bars ;
- la pression plus faible est inférieure ou égale à 12 bars ;
- l'unité de moulage comprend un couvercle monté sur la face supérieure du moule et interposé entre celle-ci et chaque raccord, ce couvercle étant pourvu de perçages de mise en communication de chaque raccord avec son circuit respectif.

D'autres objets et avantages de l'invention apparaîtront à la lumière de la description d'un mode de réalisation, faite ci-après en référence aux dessins annexés dans lesquels :

- la **FIG.1** est une vue en coupe et en perspective montrant une unité de moulage pourvue d'une paire de dispositifs de boxage ;
- la **FIG.2** est une vue en coupe et en perspective éclatée montrant, par l'intérieur, un demi-moule et son dispositif de boxage associé ;
- la **FIG.3** est une vue en coupe et en perspective éclatée montrant, par l'extérieur, un demi-moule et son dispositif de boxage associé ;
- la **FIG.4** est une vue en perspective et en coupe brisée montrant le demi-moule de la **FIG.2** et de la **FIG.3** ;
- la **FIG.5** est une vue en coupe horizontale montrant l'unité de moulage, prise au niveau des dispositifs de boxage ;
- la **FIG.6** est une vue de détail en coupe verticale montrant un dispositif de boxage en position rétractée de l'insert, pendant le formage d'un récipient ;
- la **FIG.7** est une vue similaire à la **FIG.6**, montrant l'insert en position déployée ;
- la **FIG.8** est une vue de détail en coupe horizontale montrant le dispositif de boxage en position rétractée de l'insert, pendant le formage d'un récipient ;
- la **FIG.9** est une vue similaire à la **FIG.8**, montrant l'insert en position déployée ;
- la **FIG.10** est une vue en perspective éclatée montrant une partie de l'unité de moulage ;
- la **FIG.11** est une vue de détail en coupe horizontale illustrant le dimensionnement du moule et de l'insert ;
- la **FIG.12** est une vue en coupe partielle verticale du moule, montrant les deux inserts en regard en position déployée ;
- la **FIG.13** est une vue en perspective d'un récipient formé dans une unité de moulage telle qu'illustrée sur les figures précédentes ;
- la **FIG.14** est une vue en coupe horizontale du récipient de la **FIG.13**, suivant le plan de coupe XIV-XIV ;
- la **FIG.15** est une vue en coupe en perspective éclatée montrant, par l'intérieur, un demi-moule et son dispositif de boxage associé, selon une variante de réalisation ;
- la **FIG.16** est une vue de détail en coupe horizontale montrant le dispositif de boxage de la **FIG.15** en position déployée de l'insert ;
- la **FIG.17** est une vue en perspective, par l'avant, d'un insert équipant le demi-moule des **FIG.15** et **FIG.16** ;
- la **FIG.18** est une vue en perspective, par l'arrière, de l'insert de la **FIG.17**.

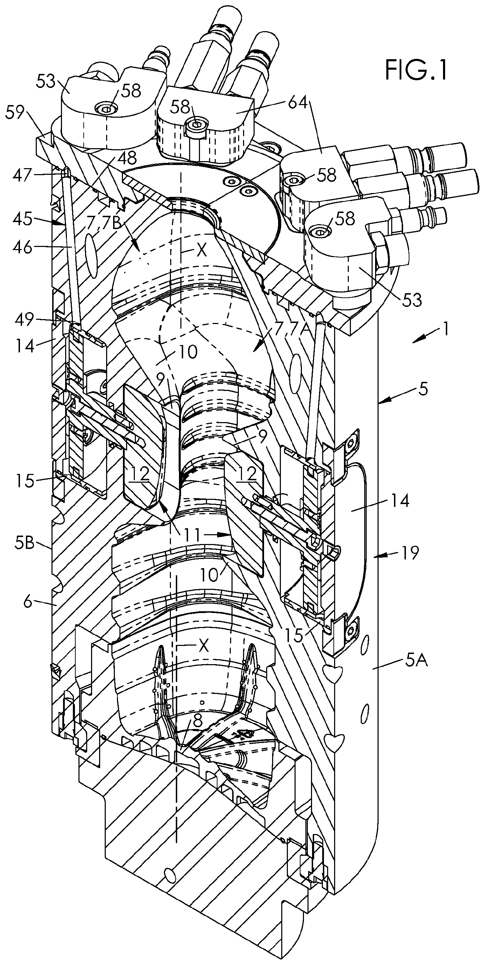

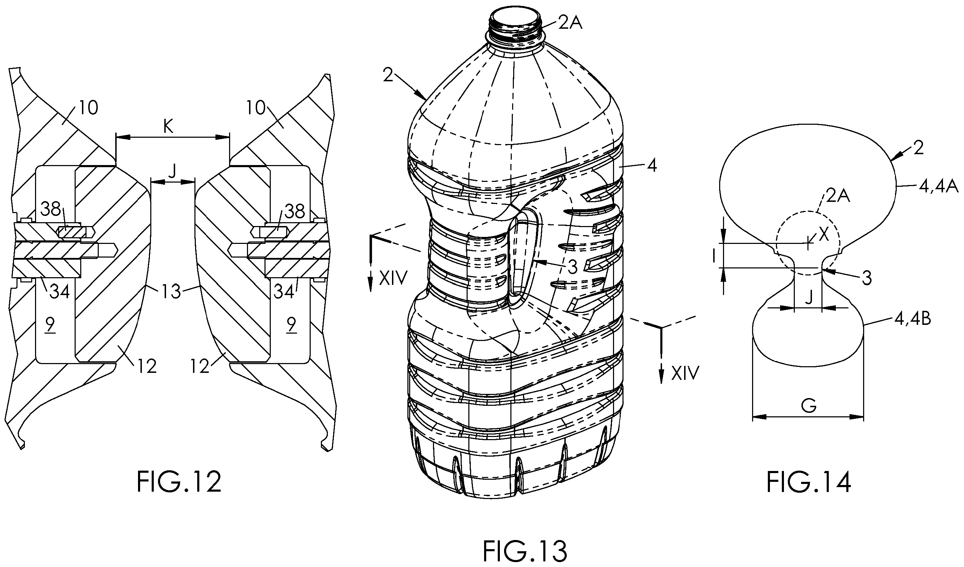

Sur la **FIG.1** est représentée, en coupe et en perspective, une unité **1** de moulage pour le formage, à partir d'une ébauche (typiquement une préforme), d'un récipient **2** (tel qu'une bouteille ou un bidon, comme illustré sur la **FIG. 13**) muni d'une réserve **3** formée en creux vers l'intérieur du récipient **2**. Le récipient **2** est pourvu, de manière classique, d'un corps **4**, d'un fond et d'un col **2A** qui s'ouvre à l'opposé du fond. Dans l'exemple illustré sur les **FIG.13** et **FIG.14**, la réserve **3** en creux est une poignée formée dans le corps **4** du récipient pour en faciliter la préhension.

Dans ce cas, le corps 4 est, au niveau de la poignée, subdivisé en une partie **4A** avant et une partie **4B** arrière. Comme illustré sur la **FIG.14**, la partie **4A** avant et la partie **4B** ont des formes bombées. La partie **4B** arrière est la partie qui est destinée à être logée dans la paume de l'utilisateur lorsque celui-ci saisit le récipient individuellement.

L'unité **1** de moulage comprend, en premier lieu, un moule **5** muni d'une paroi **6** latérale qui définit une cavité **7** à l'empreinte d'une partie du récipient **2**. En l'espèce, la cavité **7** est à l'empreinte du corps **4** du récipient **2**, le moule **5** comprenant en outre un fond **8** à l'empreinte du fond du récipient **2**. Le moule **5** est réalisé en métal, par exemple en acier ou en aluminium (ce terme couvrant également les alliages d'aluminium). La cavité **7** (et donc le récipient **2**) s'étend suivant un axe **X** principal qui définit une direction verticale. Tout plan perpendiculaire à l'axe **X** principal est dit horizontal.

Selon un mode de réalisation illustré sur les dessins, la paroi **6** latérale comprend deux demi-moules **5A**, **5B** définissant chacun une demi-empreinte **7A**, **7B** du corps **4** du récipient **2** et montés en rotation l'un par rapport à l'autre autour d'un axe commun formé par une charnière, entre :

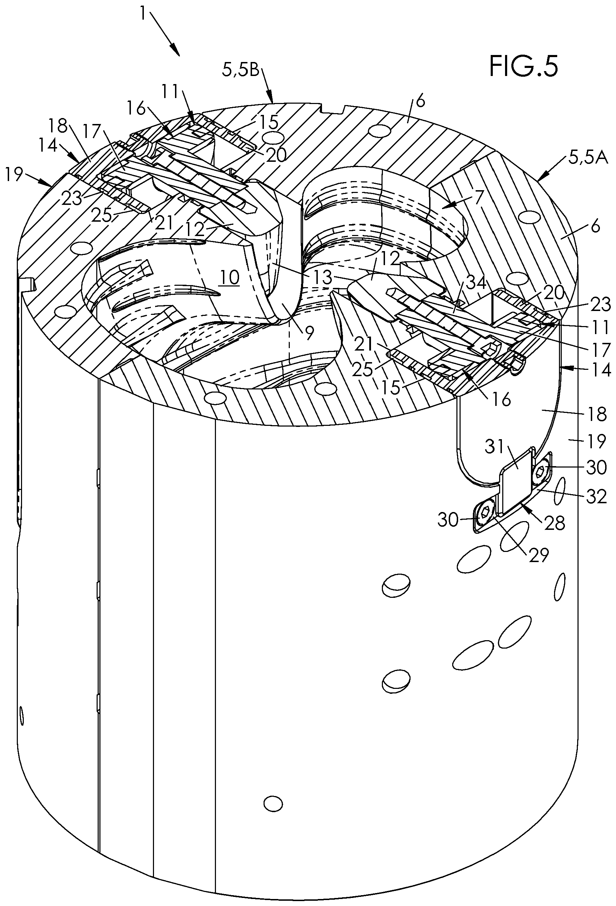

- une position ouverte, dans laquelle les demi-moules **5A**, **5B** sont écartés angulairement l'un de l'autre pour permettre l'introduction de l'ébauche et l'évacuation du récipient **2** formé,
- une position fermée (illustrée sur la **FIG.1** et sur la **FIG.5**), dans laquelle les demi-moules **5A**, **5B** sont appliqués l'un contre l'autre et emprisonnent entre eux le fond **8** de moule, pour former ainsi la cavité **7** et définir l'empreinte du récipient **2** à former.

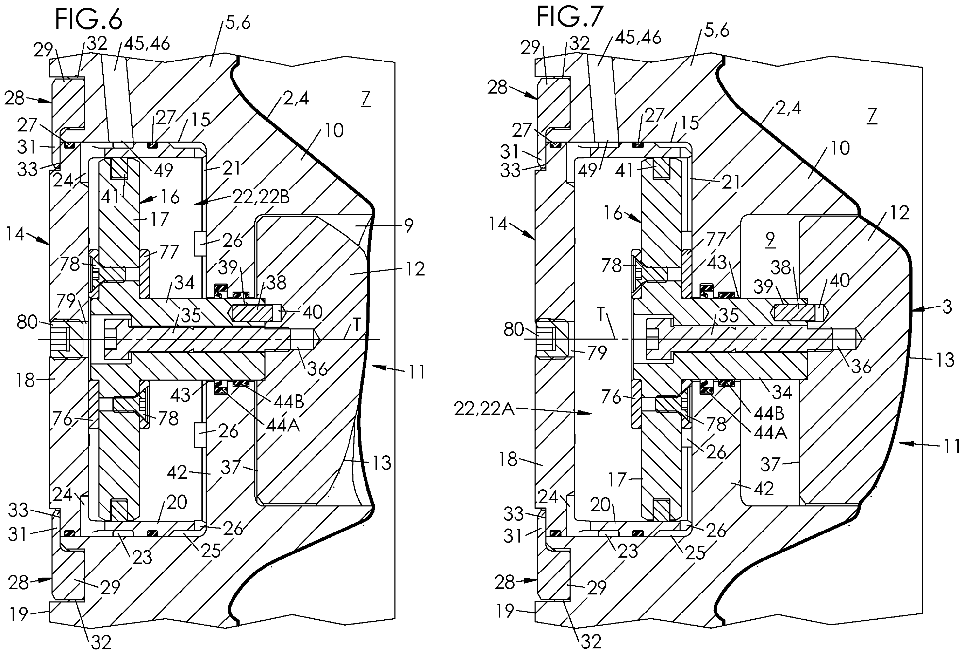

La paroi **6** latérale est pourvue d'un logement **9** qui s'ouvre dans la cavité **7**. Comme on le voit notamment sur la **FIG.6** et sur la **FIG.7**, ce logement **9** est formé en creux dans une excroissance **10** formant une saillie vers l'intérieur de la cavité **7** et formant une partie de la contre-empreinte de la réserve **3** en creux définissant la poignée.

Selon un mode de réalisation illustré notamment sur la **FIG.1** et sur la **FIG.5**, correspondant à un récipient **2** pourvu de deux réserves **3** en creux, de préférence symétriques par rapport à un plan central de symétrie générale du récipient **2** et formant conjointement la poignée, chaque demi-moule **5A**, **5B** est pourvu d'un logement **9** s'ouvrant dans la demi-empreinte **7A**, **7B** et formé en creux dans une excroissance **10** qui forme une saillie vers l'intérieur de la cavité **7**.

L'unité **1** de moulage comprend en deuxième lieu, et pour chaque logement **9**, un dispositif **11** de boxage. Le terme « boxage » désigne une technique de modelage local de la matière par repoussage au moyen d'une pièce mobile, pratiquée pendant le formage du récipient **2** (et plus précisément initiée pendant les phases de présoufflage et de soufflage du récipient **2**).

Chaque dispositif **11** de boxage comprend un insert **12**, de forme complémentaire d'un logement **9** et reçu dans celui-ci. Chaque insert **12** présente une face **13** frontale à l'empreinte d'une partie locale (c'est-à-dire de faible superficie relative) du récipient **2**, et plus précisément du fond de la réserve **3** en creux. La face **13** frontale est destinée à venir repousser la matière du récipient **2** pour compléter l'empreinte de la réserve **3** en creux, comme il sera expliqué ci-après. L'insert **12** est avantageusement réalisé en aluminium.

Comme on le voit sur la **FIG.1** et sur la **FIG.5**, l'unité **1** de moulage est équipée d'une paire de dispositifs **11** de boxage (de préférence symétriques) dont les inserts **12** sont placés en regard l'un de l'autre.

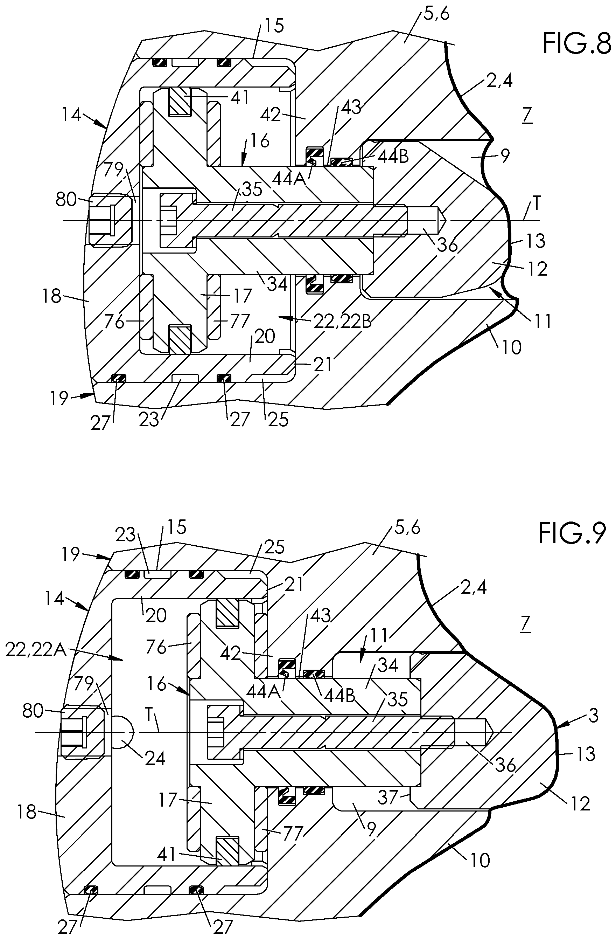

Chaque insert **12** est monté en translation par rapport à la paroi **6** latérale (c'est-à-dire, dans l'exemple illustré, par rapport à chaque demi-moule **5A**, **5B**) suivant un axe **T** transversal entre une position rétractée (**FIG.6** et **FIG.8**) dans laquelle l'insert **12** est au moins en partie escamoté dans le logement **9**, et une position déployée (**FIG.7** et **FIG. 9**) dans laquelle l'insert **12** fait au moins en partie saillie dans la cavité **7** hors du logement **9**.

Plus précisément, et comme cela est bien visible sur la **FIG.6** et sur la **FIG.8**, en position rétractée de l'insert **12**, la face **13** frontale est incluse dans le logement **9** et ne dépasse pas de l'excroissance **10**, tandis qu'en position déployée de l'insert **12**, la face **13** frontale fait saillie dans la cavité **7** et s'étend dans le prolongement de l'excroissance **10** pour compléter avec celle-ci l'empreinte de la réserve **3** formée en creux dans le récipient **2**.

Cette configuration n'est pas exclusive. Ainsi, selon un autre mode de réalisation, en position rétractée de l'insert **12**, la face **13** frontale de l'insert **12** est située en saillie par rapport au bord interne de l'excroissance **10**. Selon encore un autre mode de réalisation, en position rétractée de l'insert **12**, la face **13** frontale de l'insert **12** se trouve dans le prolongement du bord interne de l'excroissance **10**.

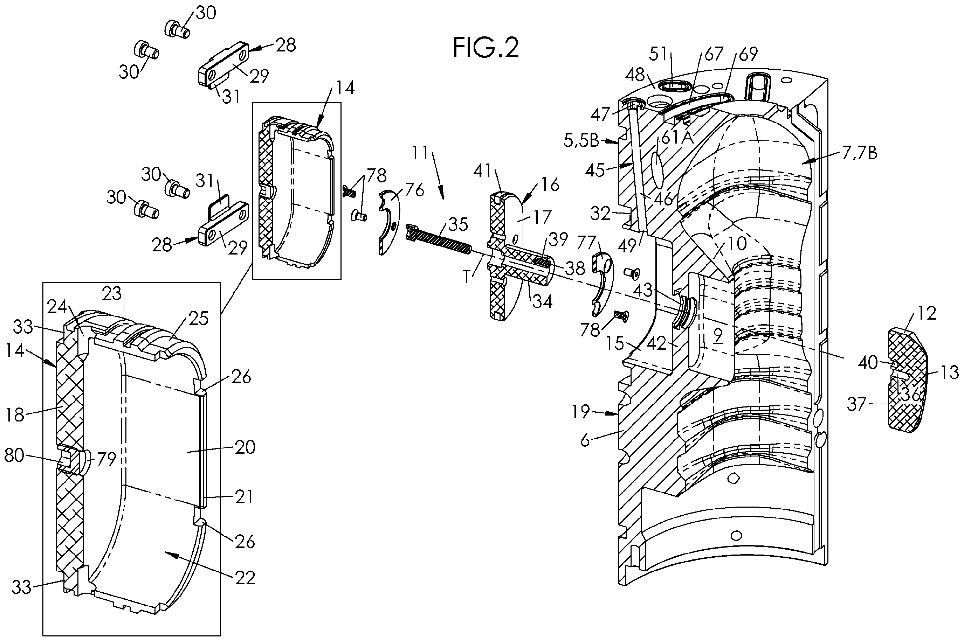

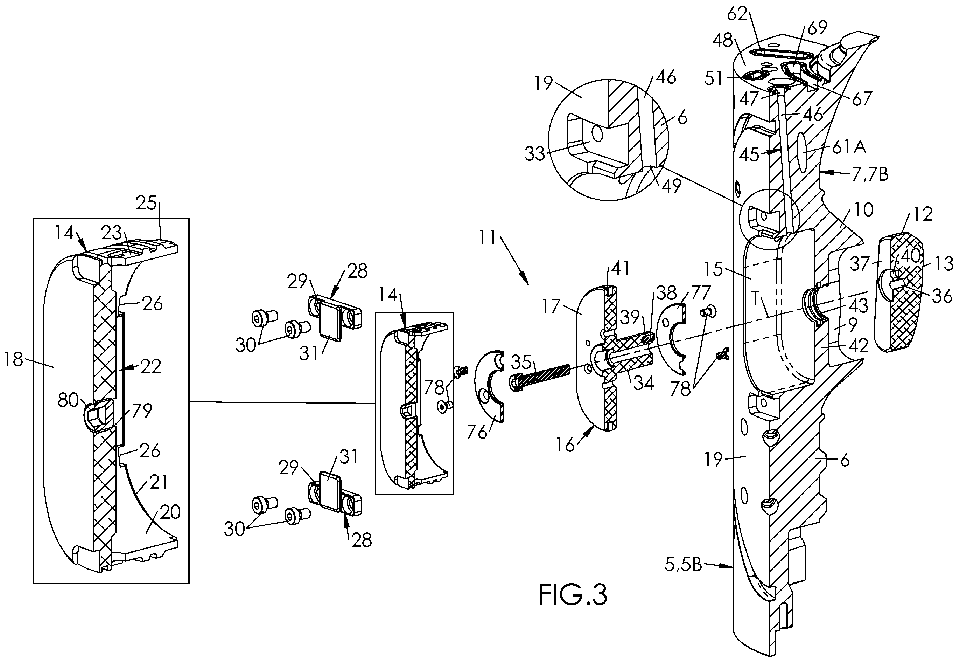

Comme on le voit bien sur les **FIG.2** et **FIG.3**, l'insert **12** (comme son logement **9**) présente un contour asymétrique de révolution autour de l'axe **T**, ce qui bloque la rotation de l'insert **12** autour de celui-ci. Plus précisément, l'insert **12** est, de préférence, plus haut (suivant l'axe **X** général du moule **5**) que large (dans un plan horizontal) Dans l'exemple illustré, l'insert **12** présente un contour ovale de grand axe sensiblement vertical.

Comme illustré sur les dessins, chaque dispositif **11** de boxage comprend par ailleurs une chemise **14** rapportée, montée dans un évidement **15** complémentaire creusé dans la paroi **6** latérale (c'est-à-dire, dans l'exemple illustré, dans chaque demi-moule **5A**, **5B**) et fixée à celle-ci. La chemise **14** est avantageusement réalisée en acier.

Chaque dispositif **11** de boxage comprend en outre un actionneur **16** solidaire de l'insert **12** pour déplacer celui-ci de sa position rétractée à sa position déployée, et réciproquement, et comprenant à cet effet un piston **17** monté en translation dans la chemise **14.** L'actionneur **16** est de préférence réalisé en aluminium.

Selon un mode de réalisation illustré sur les dessins, et plus particulièrement visible sur les **FIG.6** à **FIG.9**, la chemise **14** comprend une paroi **18** de fond qui, lorsque la chemise **14** est insérée dans son évidement **15**, affleure une face **19** externe du moule **5**, et un cylindre **20** qui fait saillie transversalement de la paroi **18** de fond et se termine par un rebord **21.**

La chemise **14** définit intérieurement une chambre **22** dans laquelle est monté le piston **17.** Comme l'insert **12**, la chemise **14** et l'évidement **15** la recevant, de même que le piston **17**, présentent un contour asymétrique de révolution autour de l'axe **T** transversal, ce qui bloque toute rotation du piston **17** autour de celui-ci, au bénéfice de la précision de guidage en translation de l'insert **12.** Plus précisément, la chemise **14**, son évidement **15** et le piston **17** sont, de préférence, plus hauts (suivant l'axe **X** général du moule **5**) que larges (dans un plan horizontal). Dans l'exemple illustré, la chemise **14**, l'évidement **15** et le piston **17** présentent un contour ovale de grand axe sensiblement vertical.

Le piston **17** subdivise la chambre **22** en une demi-chambre **22A** arrière et une demi-chambre **22B** avant. Dans l'exemple illustré, la demi-chambre **22A** arrière est limitée intérieurement par le piston **17** et extérieurement par la paroi **18** de fond de la chemise **14.** Egalement dans l'exemple illustré, la demi-chambre **22B** avant est limitée extérieurement par le piston **17** et intérieurement par le fond de l'évidement **15.**

La chemise **14** est pourvue, sur une face périphérique externe du cylindre **20**, d'une rainure **23** arrière qui débouche dans la demi-chambre **22A** arrière par plusieurs ouvertures (ici sous forme de perçages) **24** dans la chemise **14**, distribuées sur la périphérie de celle-ci. Dans l'exemple illustré, la chemise **14** est pourvue de deux ouvertures **24** diamétralement opposées, distribuées en l'occurrence suivant un axe vertical. En variante, la chemise **14** pourrait inclure un nombre d'ouvertures **24** supérieur, par exemple quatre ouvertures **24** réparties à 90° (ou différemment) autour de l'axe T transversal.

La chemise **14** est en outre pourvue, sur la face périphérique externe du cylindre **20**, d'une rainure **25** avant qui débouche dans la demi-chambre **22B** avant par plusieurs échancrures **26** pratiquées dans le rebord **21** et distribuées sur la périphérie de la chemise **14.** Dans l'exemple illustré, la chemise **14** est pourvue de six échancrures réparties à environ 60° autour de l'axe **T** transversal.

Des joints **27** montés sur la face externe du cylindre **20**, et comprimés entre celui-ci et l'évidement **15**, assurent l'étanchéité des rainures **23**, **25** l'une par rapport à l'autre, et donc des demi-chambres **22A**, **22B** l'une par rapport à l'autre.

Après son introduction dans l'évidement **15**, la chemise **14** est fixée à la paroi **6** latérale du moule **5.** Comme cela est visible sur les dessins, et plus particulièrement sur la **FIG.2** et sur la **FIG.3**, la chemise **14** est fixée à la paroi **6** latérale au moyen d'au moins une bride **28** comprenant un corps **29** fixé sur le moule **5** au moyen de vis **30**, et une languette **31** faisant saillie du corps **29** et prenant appui, par l'extérieur, contre la paroi **18** de fond de la chemise **14.** Dans l'exemple illustré, la chemise **14** est fixée à la paroi **6** latérale au moyen d'une paire de brides **28** montées de part et d'autre, verticalement, de la chemise **14.**

Pour éviter toute excroissance sur la face **19** externe du moule **5**, chaque bride **28** vient avantageusement se loger dans une réserve **32** en creux formée de manière complémentaire dans la paroi **6** latérale du moule **5**, tandis que la languette **31** vient se loger dans un évidement **33** formé dans la paroi **18** de fond de la chemise **14.**

Selon un mode de réalisation illustré sur les dessins, l'actionneur **16** comprend une tige **34** qui s'étend radialement en saillie à partir du piston, et sur laquelle l'insert **12** est fixé, par exemple par vissage.

Plus précisément, dans l'exemple illustré, l'insert **12** est fixé sur la tige **34** au moyen d'une vis **35** traversant le piston **17** et la tige **34** et venant en prise hélicoïdale avec un trou **36** taraudé pratiqué dans une face **37** arrière de l'insert **12**, opposée à la face **13** frontale.

L'insert **12** est avantageusement immobilisé en rotation par rapport à l'actionneur **16** au moyen d'une goupille **38** montée dans un trou **39** pratiqué dans la tige **34** et dont une extrémité en saillie vient se loger dans un trou **40** pratiqué, en regard, dans la face **37** arrière de l'insert **12.**

Comme cela est bien visible sur les **FIG.6** à **FIG.9**, le piston **17** est pourvu d'un segment **41** périphérique rapporté, en contact avec le cylindre **20** et qui, en complément des joints **27**, assure le cloisonnement étanche des deux demi-chambres **22A**, **22B**. Le segment **41** est avantageusement réalisé dans un matériau à faible coefficient de frottement, par exemple en bronze ou, de préférence, en polytétrafluoroéthylène (PTFE).

Comme on le voit également sur les **FIG.6** à **FIG.9**, l'évidement **15** se termine, du côté de la cavité **7**, par une cloison **42** qui sépare l'évidement **15** du logement **9** et délimite intérieurement la demi-chambre **22B** avant.

Cette cloison **42** est percée d'un alésage **43** dans lequel la tige **34** de l'actionneur **16** est montée en translation, avec interposition d'un ou plusieurs joints **44A** d'étanchéité qui isolent la demi-chambre **22B** avant du logement **9**, et de préférence également avec interposition d'une ou plusieurs bagues **44B** de guidage. Dans l'exemple illustré, le joint **44A** est un joint dynamique à lèvre. Quant à la bague **44B**, elle peut être réalisée en PTFE (polytétrafluoroéthylène).

Chaque dispositif **11** de boxage comprend un circuit **45** fluidique de commande du déplacement du piston **17**, au moins de sa position rétractée à sa position déployée. Selon un mode de réalisation avantageux, le circuit **45** fluidique est pneumatique, le fluide employé étant un gaz (typiquement de l'air) sous pression.

Chaque circuit **45** comprend à cet effet au moins un conduit **46** fluidique primaire d'alimentation de la chambre **22** (et plus précisément de la demi-chambre **22A** arrière) qui communique avec la chambre **22** (et plus précisément avec la demi-chambre **22A** arrière) par les ouvertures **24**.

En pratique, et comme cela est visible notamment sur les **FIG.1** à **FIG.3**, **FIG.6**, **FIG.7** et **FIG.10**, le conduit **46** primaire est percé dans le moule 5 et débouche, par une extrémité **47** amont, sur une face **48** supérieure du moule **5** et, par une extrémité **49** aval, dans l'évidement **15** au droit de la rainure **23** arrière (**FIG.6** et **FIG.7**).

Selon un mode de réalisation illustré sur les dessins, la commande du déplacement du piston **17** est de type double effet, chaque circuit **45** fluidique étant configuré pour commander par ailleurs le déplacement du piston **17** correspondant de sa position déployée à sa position rétractée.

A cet effet, chaque circuit **45** comprend un conduit **50** fluidique secondaire d'alimentation de la demi-chambre **22B** avant, qui communique avec celle-ci par les échancrures **26**.

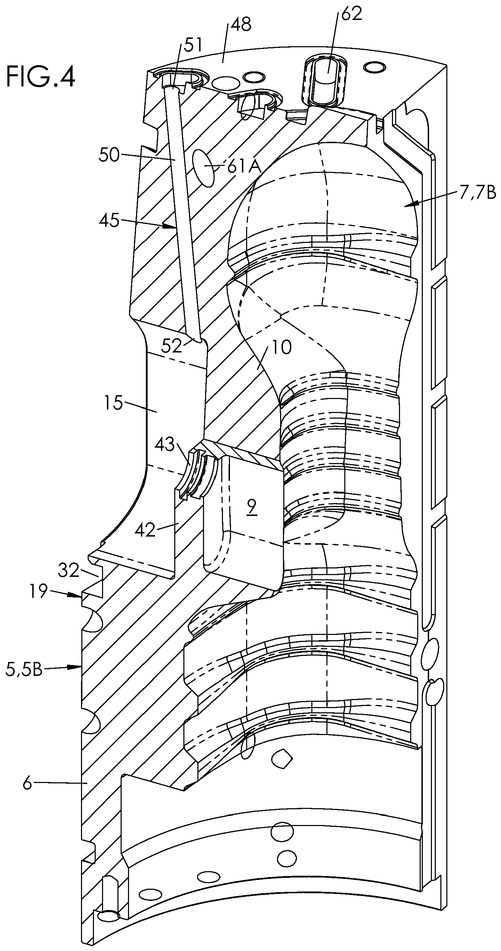

Plus précisément, et comme cela est visible notamment sur la **FIG.4**, le conduit **50** secondaire est percé dans le moule **5** et débouche, par une extrémité **51** amont, sur la face **48** supérieure du moule **5** et, par une extrémité **52** aval, dans l'évidement **15** au droit de la rainure **25** avant.

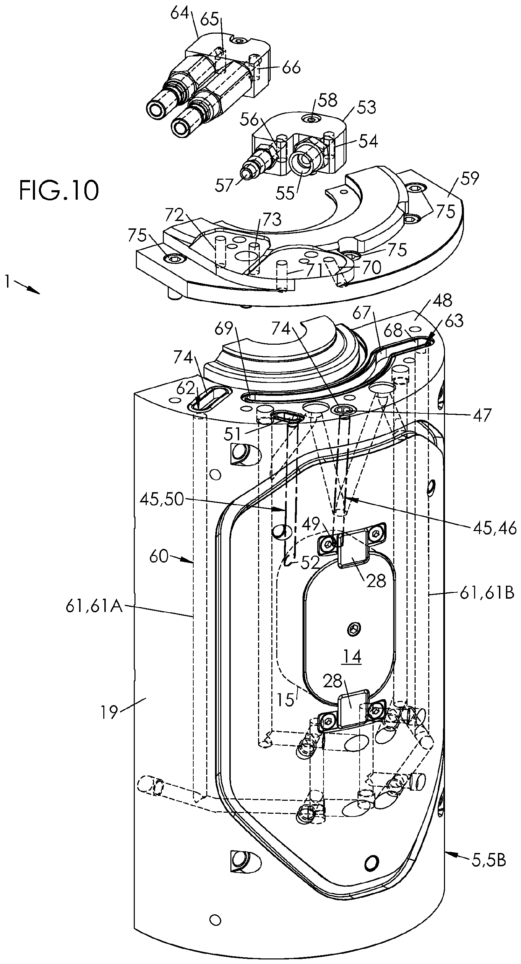

Selon un mode de réalisation illustré sur les dessins, le conduit **46** primaire est pratiqué sensiblement verticalement dans la paroi **6** latérale du moule **5**, tandis que le conduit **50** secondaire est pratiqué obliquement (avec cependant un angle assez faible) dans la paroi **6** latérale du moule **5**. Sur la **FIG.10**, le conduit **46** primaire et le conduit **50** secondaire sont représentés en trait mixte gras.

Comme on le voit sur la **FIG.1** et sur la **FIG.10**, l'unité **1** de moulage comprend un raccord **53** pneumatique d'alimentation en fluide sous pression au moins du conduit **46** primaire. A cet effet, le raccord **53** comprend une arrivée **54** primaire en communication avec l'extrémité **47** amont du conduit **46** primaire. Cette arrivée **54** primaire se présente avantageusement sous forme d'un conduit percé dans le raccord **53**, et qui débouche dans une fiche **55** primaire (ici de type mâle) de branchement à un flexible primaire (non représenté) d'amenée de fluide sous pression.

L'arrivée **54** primaire est, via la fiche **55** primaire et le flexible primaire, de préférence reliée à une source de fluide, typiquement du gaz, à pression élevée, avantageusement supérieure à 20 bars (et par ex. de 40 bars environ). Il peut s'agir de la source utilisée pour le soufflage des récipients, ou bien d'une source de pression autre, générant le cas échéant une pression de valeur différente de la source de soufflage.

Dans l'exemple illustré, où la commande de déplacement du piston **17** est à double effet, et où, outre le conduit **46** primaire, le circuit **45** pneumatique comprend un conduit **50** secondaire d'alimentation de la demi-chambre **22B** avant, le raccord **53** pneumatique comprend une arrivée **56** secondaire en communication avec l'extrémité **51** amont du conduit **50** secondaire. Cette arrivée **56** secondaire se présente avantageusement sous forme d'un conduit percé dans le raccord **53**, et qui débouche dans une fiche **57** secondaire (ici également de type mâle) de branchement à un flexible secondaire (non représenté) d'amenée de fluide sous pression.

L'arrivée **56** secondaire est, via la fiche **57** secondaire et le flexible secondaire, reliée à une source de fluide à pression comparativement plus faible, avantageusement inférieure ou égale à 12 bars (et par ex. de 7 bars environ).

Les extrémités **47**, **51** amont des conduits **46**, **50** débouchent avantageusement au voisinage l'une de l'autre, de manière à permettre leur branchement conjoint aux sources respectives de fluide sous pression via un unique raccord **53** monté sur la face **48** supérieure du moule **5**, comme illustré sur la **FIG.1**.

Le raccord **53** est fixé sur le moule **5** par encliquetage ou, comme dans l'exemple illustré sur la **FIG.1** et sur la **FIG.10**, au moyen d'au moins une vis **58**.

Selon un mode de réalisation avantageux illustré sur la **FIG.1** et sur la **FIG.10**, l'unité **1** de moulage comprend un couvercle **59** monté sur la face **48** supérieure du moule **5** et interposé entre celle-ci et le raccord **53**.

Comme cela est visible sur la **FIG.10**, l'unité **1** de moulage comprend un circuit **60** fluidique (par ex. hydraulique) de régulation thermique de la paroi **6**. Le fluide employé est avantageusement un liquide, par ex. de l'eau ou de l'huile. Ce circuit **60** est prévu pour maintenir la température de la paroi **6** à une température sensiblement constante, soit basse (typiquement de l'ordre de 10°C) pour assurer un refroidissement du récipient **2** tout juste formé, soit élevée (typiquement de l'ordre de 120°C) pour assurer une thermofixation du récipient **2** et accroître ainsi, par voie thermique, sa cristallinité (et donc sa résistance mécanique).

Comme on le voit sur la **FIG.10**, le circuit **60** fluidique inclut des canaux **61** percés dans la paroi **6** du moule **5** et s'étend entre une ouverture **62** d'alimentation et une ouverture **63** d'évacuation pratiquées dans la face **48** supérieure du moule **5**. En d'autres termes, le circuit **60** fluidique débouche, par l'ouverture **62** d'alimentation et par l'ouverture **63** d'évacuation, sur la face **48** supérieure du moule **5**.

Pour des raisons de commodité de fabrication (par perçage), les canaux **61** sont subdivisés en plusieurs sections, tout particulièrement :

- une section **61A** amont, qui débouche sur l'ouverture **62** d'alimentation et inclut plusieurs alésages pratiqués verticalement, horizontalement et/ou obliquement dans la paroi **6** ;
- une section **61B** aval, qui débouche sur l'ouverture **63** d'évacuation et inclut également plusieurs alésages pratiqués verticalement, horizontalement et/ou obliquement dans la paroi **6** et qui communique avec la section **61A** amont dans une zone médiane du moule **5**.

Comme on peut le voir sur la **FIG.10** où ils sont visibles par transparence en pointillés, les canaux **61** sont percés de manière à contourner l'évidement **15** et à ne pas croiser les conduits **46**, **50** du circuit **45** fluidique pneumatique.

Comme on le voit sur la **FIG.1** et sur la **FIG.10**, l'unité **1** de moulage comprend un raccord **64** fluidique monté sur la face **48** supérieure du moule **5** pour assurer l'alimentation du circuit **60** fluidique en liquide frais (ou, respectivement, réchauffé) et assurer l'évacuation de celui-ci du liquide réchauffé (ou refroidi), après qu'il a effectué un échange thermique avec la paroi **6**.

A cet effet, le raccord **64** fluidique comprend une arrivée **65** fluidique (ici sous forme d'un conduit percé dans le raccord **64**) en communication avec l'ouverture **62** d'alimentation, et une sortie **66** fluidique (ici également sous forme d'un conduit percé dans le raccord **64**) en communication avec l'ouverture **63** d'évacuation.

Dans l'exemple illustré sur la **FIG.10**, les ouvertures **62**, **63** sont distantes l'une de l'autre, et débouchent sur la face **48** supérieure de manière sensiblement diamétralement opposée. Afin de permettre un raccordement fluidique simultané des ouvertures **62**, **63** via un raccord **64** compact, le moule **5** comprend une gorge **67** creusée dans la face **48** supérieure, qui s'étend d'une extrémité **68** externe située au droit de l'ouverture **63** d'évacuation, jusqu'à une extrémité **69** interne située au voisinage de l'ouverture **62** d'alimentation.

Selon un mode de réalisation préféré, illustré sur la **FIG.1** et sur la **FIG.10**, où l'unité **1** de moulage est pourvue d'un couvercle **59** rapporté fixé sur la face **48** supérieure du moule **5**, ce couvercle **59** est interposé entre la face **48** supérieure et le raccord **64** fluidique.

Comme on peut le voir par transparence sur la **FIG.10**, le couvercle **59** est pourvu de perçages **70** à **73** de mise en communication de chaque raccord **53**, **64** avec son circuit **45**, **60** respectif.

De manière plus détaillée, le couvercle **59** comprend :

- un premier perçage **70** (oblique) de mise en communication de l'arrivée **54** primaire du raccord **53** pneumatique avec l'extrémité **47** amont du conduit **46** primaire ;
- un deuxième perçage **71** (vertical) de mise en communication de l'arrivée **56** secondaire du raccord **53** pneumatique avec l'extrémité **51** amont du conduit **50** secondaire ;
- un troisième perçage **72** (vertical) de mise en communication de l'arrivée **65** fluidique avec l'ouverture **62** d'alimentation ;
- un quatrième perçage **73** (vertical) de mise en communication de la sortie **66** fluidique avec l'ouverture **63** d'évacuation. Dans l'exemple illustré, le quatrième perçage **73** débouche au droit de l'extrémité **69** interne de la gorge **67**, via laquelle le quatrième perçage **73** est en communication fluidique avec l'ouverture **63** d'évacuation.

L'étanchéité aux gaz et aux liquides (typiquement à l'air et à l'eau) de l'interface entre le couvercle **59** et la face **48** supérieure est assurée, autour des extrémités **47**, **51** amont des conduits **46**, **50** et autour des ouvertures **62**, **63** (et plus précisément autour de la gorge **67**), au moyen de joints **74** en élastomère, par exemple en silicone ou en caoutchouc naturel ou synthétique.

La fixation du couvercle **59** sur la face **48** supérieure du moule **5** peut, comme dans l'exemple illustré, être assurée au moyen de vis **75**.

Le fait que le circuit **45** pneumatique et le circuit **60** fluidique débouchent tous deux sur la face **48** supérieure du moule **5** permet de déporter sur celle-ci les branchements d'alimentation des circuits **45**, **60**, et procure de ce fait au moins trois avantages :

- d'abord, il n'est pas nécessaire de ménager des accès latéraux aux flexibles d'amenée (et d'évacuation), ce qui simplifie l'architecture de l'unité **1** de moulage, et en particulier des pièces de support du moule **5** ;
- ensuite, l'encombrement radial de l'unité **1** de moulage est réduit ;
- enfin, les branchements par la face **48** supérieure sont plus simples et aisés pour tout technicien chargé de la maintenance de l'unité **1** de moulage.

Par ailleurs, pour assurer le positionnement précis de l'insert **12** par rapport à la cavité **7**, et pour limiter en outre l'usure de l'actionneur **16** et du moule **5**, chaque dispositif **11** de boxage comprend avantageusement une paire de silentblocs **76**, **77** rapportés, fixés sur l'actionneur **16** de part et d'autre du piston **17**, à savoir :

- un silentbloc **76** arrière fixé sur le piston **17** au moyen de vis **78**, et qui, en position rétractée de l'insert **12**, est pris en sandwich entre le piston **17** et la paroi **18** de fond (**FIG.6**, **FIG.8**) ;
- un silentbloc **77** avant emmanché sur la tige **34** et fixé sur le piston **17** au moyen de vis **78** et qui, en position déployée de l'insert **12**, est pris en sandwich entre le piston **17** et la cloison **42** (**FIG.7**, **FIG.9**).

Il est rappelé ici que le terme "Silentbloc" (au singulier) est une marque française de la société HUTCHINSON SA, d'où est issu un nom commun utilisé pour désigner (cf. dictionnaire Larousse, par exemple) un dispositif souple de fixation ou d'amortissement entre deux éléments : l'emploi des termes "silentbloc" ou "silentblocs" dans la présente demande renvoie à un tel dispositif.

Selon un mode préféré de réalisation, chaque silentbloc **76**, **77** est réalisé en polyuréthane, de préférence dans une nuance de polyuréthane commercialisée par la société Trelleborg sous la dénomination Zurcon Z20 (marque déposée). Ce matériau présente le double avantage d'une grande dureté (au bénéfice de la précision de positionnement de l'insert **12**) et d'une bonne résistance à l'usure, au bénéfice de la fiabilité et de la durabilité du dispositif **11** de boxage.

Le montage de chaque dispositif **11** de boxage dans chaque demi-moule **5A**, **5B** est illustré sur les **FIG.2** et **FIG.3**.

Les silentblocs **76**, **77** sont fixés sur l'actionneur **16** au moyen des vis **78** ; la goupille **38** est emmanchée dans le trou **39** et la vis **35** de fixation de l'insert **12** introduite dans l'actionneur **16** jusqu'à faire saillie de l'extrémité de la tige **34**. Le piston **17** est alors inséré dans la chemise **14**, puis celle-ci, équipée de ses joints **27** d'étanchéité, est introduite, par l'extérieur du moule **5**, dans son évidement **15** suivant l'axe **T** transversal, la tige **34** étant insérée dans l'alésage **43**.

La chemise **14** est fixée sur la paroi **6** latérale du moule au moyen des brides **28**, qui sont montées dans leurs réserves **32** respectives et vissées sur la paroi **6** latérale. L'insert **12** est monté par l'intérieur du demi-moule **5A**, **5B** en étant introduit dans le logement **9** suivant l'axe **T** transversal jusqu'au contact avec l'extrémité de la tige **34**, la goupille **38** venant se loger dans le trou **40** pratiqué dans la face **37** arrière de l'insert **12**.

La fixation de l'insert **12** sur la tige **34** est alors réalisée au moyen de la vis **35**, dont le serrage dans le trou **36** taraudé est assuré au moyen d'un tournevis ou d'une clé appropriée (selon l'empreinte formée dans la tête de vis) passant au travers d'une ouverture **79** pratiquée, suivant l'axe **T**, dans la paroi **18** de fond de la chemise **14**.

Une fois réalisée la fixation de l'insert **12** sur l'actionneur **16**, l'ouverture **79** est obturée de manière étanche au moyen d'un bouchon **80** emmanché ou vissé dans celle-ci, comme illustré sur les **FIG.6** à **FIG.9**.

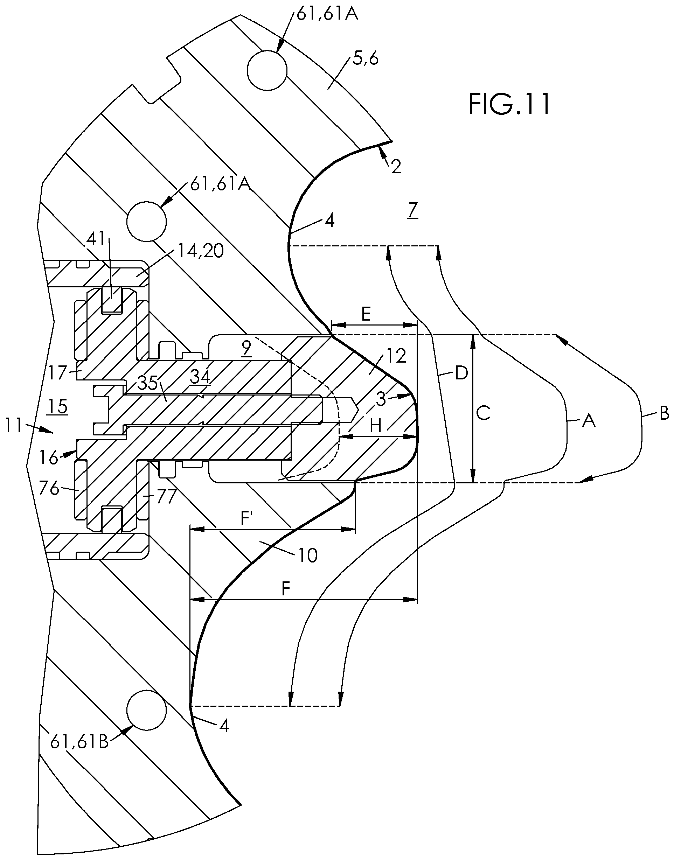

On a illustré sur les **FIG.11**, **FIG.12** et **FIG.14** le dimensionnement des parties de l'unité **1** de moulage permettant de former la réserve **3** en creux dans le récipient **2**.

Dans ce cadre, on note :

*A* la longueur de corde cumulée, mesurée dans un plan horizontal contenant l'axe **T** transversal, de l'excroissance **10** et de la saillie formée par l'insert **12** en position déployée ;

*B* la longueur de corde, également mesurée dans un plan horizontal contenant l'axe **T** transversal, de la saillie formée par l'insert **12** en position déployée au-delà de l'excroissance **10** ;

*C* la largeur, mesurée horizontalement (c'est-à-dire perpendiculairement à l'axe **X** principal), de l'insert **12** ;

*D* la longueur de corde, mesurée dans un plan horizontal contenant l'axe **T**, de l'excroissance **10**, en position rétractée de l'insert **12** ;

*E* l'extension transversale (mesurée selon l'axe **T**) maximale de la saillie formée par l'insert **12** au-delà de l'excroissance **10** ;

*F* l'extension transversale (mesurée selon l'axe **T**) maximale cumulée de l'excroissance **10** et de la saillie formée au-delà de l'excroissance **10** par l'insert **12** en position déployée ;

*F'* l'extension transversale (mesurée selon l'axe **T**) maximale de l'excroissance **10** seule ;

*G* la largeur, mesurée transversalement, de la partie **4B** arrière du corps **4** (la largeur G est considérée indifféremment sur le récipient **2** ou sur son empreinte dans le moule **5**) ;

*H* la course de l'insert **12** (ou du piston **17**), mesurée en mm entre la position rétractée (en pointillés sur la **FIG.11**) et la position déployée (en trait plein sur la **FIG.11**) ;

*I* sur le récipient **2**, le décalage, mesuré dans un plan horizontal, entre l'axe **X** (considéré dans le récipient **2**) et le fond de la réserve **3** en creux ; dans le moule **5**, *I* correspond sensiblement au décalage, mesuré dans un plan horizontal, entre l'axe **X** (considéré dans le moule **5**) et l'axe **T** transversal.

Les extensions *E, F* et *F'* sont dites « maximales » pour témoigner du cas, comme celui illustré sur la **FIG.11**, où la réserve **3**, et l'excroissance **10** et l'insert **12**, ne présentent pas de symétrie par rapport à un plan vertical contenant l'axe **T** transversal. C'est pourquoi les extensions *E* et *F* sont mesurées du côté de l'insert **12** (respectivement du côté de l'excroissance **10**) maximisant leur valeur, comme l'illustre la **FIG.11**.

Comme on l'a déjà vu, l'excroissance **10** forme une partie de la contre-empreinte de la réserve **3** en creux dans le récipient **2**. En position rétractée de l'insert **12**, l'extension *F'* transversale de l'excroissance **10** seule est telle qu'il persiste entre les excroissances **10** en regard un interstice dont la largeur, mesurée transversalement et notée *K*, est suffisante pour permettre, au cours du soufflage, le passage, lors de son expansion, de la préforme à partir de laquelle le récipient **2** est formé. Cette largeur *K* est typiquement de l'ordre de 40 mm.

Cela permet de limiter la course *H* de l'insert **12** et donc l'encombrement radial du dispositif **11** de boxage, au bénéfice de la compacité de l'unité **1** de moulage.

En pratique, la course *H* de l'insert **12** de sa position rétractée à sa position déployée est faible, c'est-à-dire qu'elle est inférieure ou égale à 20 mm. Par ailleurs, cette course est avantageusement supérieure ou égale à 10 mm. La course *H* de l'insert **12** est typiquement de l'ordre de 15 mm.

L'extension *F* transversale cumulée de l'excroissance **10** et de l'insert **12** en position déployée est telle qu'il persiste, en position déployée des deux inserts **12**, un interstice entre eux, de sorte que chaque réserve **3** en creux est borgne. En d'autres termes, la poignée formée dans le récipient **2** par les deux réserves **3** en creux dos à dos n'est pas traversante, comme illustré sur la **FIG.14.** On note *J* la largeur, mesurée transversalement, de l'interstice entre les inserts **12** en regard en position déployée. Cette largeur *J* est typiquement de l'ordre de 15 mm, ce qui correspond à la distance entre les deux réserves **3** en creux formant conjointement la poignée du récipient **2.**

Les extensions *E* et *F* sont telles que *E* est inférieure ou égale à 85% de *F* :

$$E \leq 0{,}85 \cdot F$$

Bien que limitée, la saillie formée au-delà de l'excroissance **10** par l'insert **12** en position déployée permet d'approfondir la réserve **3** malgré une course *H* faible.

Par ailleurs, la réserve **3** doit être suffisamment profonde pour faciliter la préhension du récipient **2.** A cet effet, l'extension *E* transversale est avantageusement supérieure ou égale à 30% de l'extension *F* transversale cumulée :

$$E \geq 0{,}3 \cdot F$$

Plus précisément, l'extension *E* transversale est de préférence inférieure ou égale à 35 mm :

$$E \leq 35 \, mm$$

A contrario, cette extension *E* transversale est de préférence supérieure ou égale à 10 mm :

$$E \geq 10 \, mm$$

En outre, l'extension *E* transversale est de préférence inférieure ou égale à 45 mm auxquels est soustraite la valeur du décalage *I* :

$$E \leq 45 \, mm - I$$

De même, il est avantageux de borner la longueur *B* de corde de la saillie formée par l'insert **12** en position déployée en fonction de la longueur *A* de corde cumulée de l'excroissance **10** et de la saillie formée par l'insert **12.**

Ainsi, *B* est de préférence inférieure ou égale à 80% de *A* :

$$B \leq 0{,}8 \cdot A$$

De cette façon, la quantité de matière qui subit l'étirage dû au boxage demeure limitée en extension verticale (selon l'axe **X**).

Par ailleurs, *B* est de préférence supérieure ou égale à 35% de *A* :

$$B \geq 0{,}35 \cdot A$$

Cela permet, malgré tout, d'étirer suffisamment la matière sans toutefois l'étirer au point d'en dégrader l'aspect visuel (le phénomène de surétirage se traduit par une coloration blanchâtre de la matière).

On peut également dimensionner l'insert **12** en liant sa longueur *B* de corde à sa largeur *C*.

Ainsi, le rapport entre la longueur *B* de corde et la largeur *C* est avantageusement inférieur ou égal à 2,3 :

$$B \leq 2,3 \cdot C$$

A contrario, ce rapport est avantageusement supérieur ou égal à 1,3 :

$$B \geq 1,3 \cdot C$$

On peut en outre dimensionner l'insert **12** en liant sa longueur *B* de corde à son extension *E* transversale.

Ainsi, le rapport entre la longueur *B* de corde de la saillie formée par l'insert **12** en position déployée et son extension *E* transversale est de préférence inférieur ou égal à 3,5 :

$$B \leq 3,5 \cdot E$$

A contrario, ce rapport est avantageusement supérieur ou égal à 2,2 :

$$B \geq 2,2 \cdot E$$

Plus précisément, la longueur *B* de corde de la saillie formée par l'insert **12** en position déployée est de préférence inférieure ou égale à 75 mm :

$$B \leq 75 \; mm$$

A contrario, la longueur *B* de corde de la saillie formée par l'insert **12** en position déployée est de préférence supérieure ou égale à 50 mm :

$$B \geq 50 \; mm$$

Il peut être avantageux de lier la longueur *A* de corde cumulée à l'extension *F* transversale cumulée.

Plus précisément, le rapport entre la longueur *A* de corde cumulée à l'extension *F* transversale cumulée est de préférence inférieur ou égal à 3,3 :

$$A \leq 3,3 \cdot F$$

A contrario, ce rapport est avantageusement supérieur ou égal à 2 :

$$A \geq 2 \cdot F$$

On récapitule, dans le tableau ci-dessous, des exemples de plages de valeurs (en millimètres) pour les paramètres *A* à *J* :

| Paramètre | Valeur min. (exemple) | Valeur max. (exemple) |
|:---:|:---:|:---:|
| *A* | 80 | 120 |
| *B* | 50 | 75 |
| *C* | 25 | 40 |
| *D* | 60 | 100 |
| *E* | 10 | 35 |
| *F* | 30 | 50 |

(suite)

| Paramètre | Valeur min. (exemple) | Valeur max. (exemple) |
|---|---|---|
| G | 45 | 70 |
| H | 10 | 20 |
| I | 0 | 45 |
| J | 14 | 25 |

Pour former un récipient **2**, on procède comme suit.

On commence par introduire dans le moule **5**, en position ouverte de celui-ci, une ébauche préalablement chauffée à une température supérieure à la température de transition vitreuse de sa matière (typiquement, une ébauche en PET, dont la température de transition vitreuse est de l'ordre de 80°C, est chauffée à une température de 120°C environ). Chaque insert **12** est alors dans sa position rétractée.

Le moule **5** est ensuite refermé, et un fluide (notamment de l'air) sous pression (par ex. d'environ 7 à 15 bars) est injecté dans l'ébauche, laquelle est, de préférence, simultanément étirée au moyen d'une tige coulissante. Sous la pression, la matière de l'ébauche est amenée au voisinage de la paroi **6** latérale et du fond **8** de moule, sans toutefois y être appliquée de manière intime. Comme illustré sur les **FIG.6** et **FIG.8**, il se peut que, sous la pression, la matière se déploie quelque peu dans le logement **9** en venant éventuellement partiellement s'appliquer partiellement contre la face **13** frontale de l'insert **12.**

Chaque insert **12** est ensuite déplacé vers sa position déployée. A cet effet, un fluide sous pression (ici de l'air à une pression élevée, supérieure ou égale à 20 bars et typiquement de l'ordre de 40 bars) est injecté, via le conduit **46** primaire et la rainure **23** arrière, dans la demi-chambre **22A** arrière, cependant que le fluide présent dans la demi-chambre **22B** avant est simultanément évacué, via la rainure **25** avant, par le conduit **50** secondaire. Sous la différence de pression entre la demi-chambre **22A** arrière et la demi-chambre **22B** avant, le piston **17** est, avec l'insert **12** dont il est solidaire, déplacé transversalement en direction de la cavité **7**, jusqu'à venir buter, par l'intermédiaire du silentbloc **77** avant, contre la cloison **42**, qui détermine ainsi la fin de course de l'insert **12** en position déployée.

L'insert **12** repousse la matière à la manière d'un poinçon (sans toutefois la perforer) jusqu'à atteindre sa position déployée, la poignée étant alors formée en creux dans le corps **4** du récipient **2** (**FIG.7** et **FIG.9**).

En même temps que l'insert **12** est déplacé vers sa position déployée, la pression dans le récipient **2** est augmentée (typiquement jusqu'à une valeur comprise entre 20 et 40 bars environ) pour améliorer la prise d'empreinte du récipient **2** contre la paroi **6** latérale et le fond **8** de moule. La paroi **6** latérale et le fond **8** de moule étant régulés thermiquement, le maintien d'un contact intime de la matière contre ceux-ci favorise le refroidissement (ou, dans le cas d'une thermofixation, la chauffe) du récipient **2**, au bénéfice de sa rigidité mécanique.

Après une temporisation (de quelques dixièmes de secondes), le récipient est dépressurisé, le moule **5** est ouvert et le récipient **2** est évacué du moule **5.**

L'insert **12** est replacé dans sa position rétractée avant ou après l'ouverture du moule **5**. A cet effet, le fluide sous pression est injecté, via le conduit **50** secondaire et la rainure **25** avant, dans la demi-chambre **22B** avant, cependant que le fluide présent dans la demi-chambre **22A** arrière est simultanément évacué, via la rainure **23** arrière, par le conduit **46** primaire. Sous la différence de pression entre la demi-chambre **22B** avant et la demi-chambre **22A** arrière, le piston **17** est, avec l'insert **12** dont il est solidaire, déplacé transversalement vers l'extérieur du moule **6**, jusqu'à venir buter, par l'intermédiaire du silentbloc **76** arrière, contre la paroi **18** de fond qui détermine la fin de course de l'insert **12** en position rétractée.

Par comparaison avec un dispositif de boxage ordinaire dans lequel le piston **17** serait directement monté dans un évidement pratiqué dans le moule **5**, la présence de la chemise **14** rapportée, qui fait office de pièce d'usure, limite (voire supprime) l'usure de la paroi **6** latérale du moule **5**, au bénéfice de la fiabilité de l'unité **1** de moulage.

Par ailleurs, l'intégration du circuit **45** fluidique dans le moule **5**, et plus précisément la réalisation des conduits **46**, **50** d'alimentation dans la paroi **6** latérale du moule **5**, avec des branchements réalisés sur la face **48** supérieure de celui-ci, limite l'encombrement transversal du moule **5** au bénéfice de la compacité générale de l'unité 1 de moulage.

La séparation de l'évidement **15** du logement **9** par la cloison **42** et le montage de l'insert **12** par l'intérieur du demi-moule **5A** (ou **5B**) permettent de réaliser une bonne étanchéité des demi-chambres **22A**, **22B**, au bénéfice de l'efficacité du dispositif **11** de boxage, et donc d'améliorer la qualité du récipient **2**.

La forme asymétrique (ici ovale) de l'insert **12** et de la chemise **14** évite la rotation de l'insert **12**, au bénéfice d'une bonne prise d'empreinte de la réserve **3** en creux. La distribution préférentielle uniforme des ouvertures **24** (et des échancrures **26**) permet d'assurer une bonne répartition de la pression dans la demi-chambre **22A** arrière (respectivement dans la demi-chambre **22B** avant), au bénéfice de la précision de guidage de l'insert **12** et d'une bonne prise d'empreinte de la réserve **3** en creux.

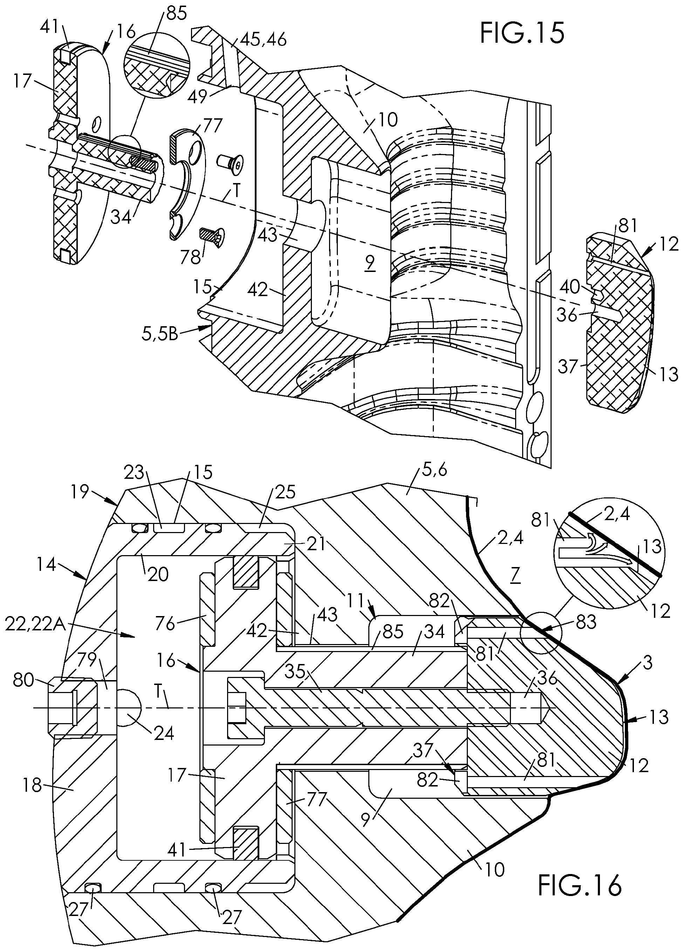

On a représenté sur les **FIG.15** à **FIG.18** une variante de réalisation de l'unité **1** de moulage.

Cette variante reprend toutes les caractéristiques de l'unité **1** de moulage décrite ci-dessus, à l'exception des caractéristiques supplémentaires ou modifiées suivantes.

Premièrement, l'insert **12** est pourvu d'au moins un canal **81** qui s'étend d'une extrémité **82** arrière, par laquelle il débouche dans le logement **9**, à une extrémité **83** avant par laquelle il débouche sur la face **13** frontale.

Selon un premier mode de réalisation, le (ou chaque) canal **81** peut être creusé dans le pourtour de l'insert **12**, sous forme de rainure (ou cannelure). Selon un mode préféré de réalisation illustré sur les **FIG.15** à **FIG.18**, le (ou chaque) canal **81** est percé dans la masse de l'insert **12**.

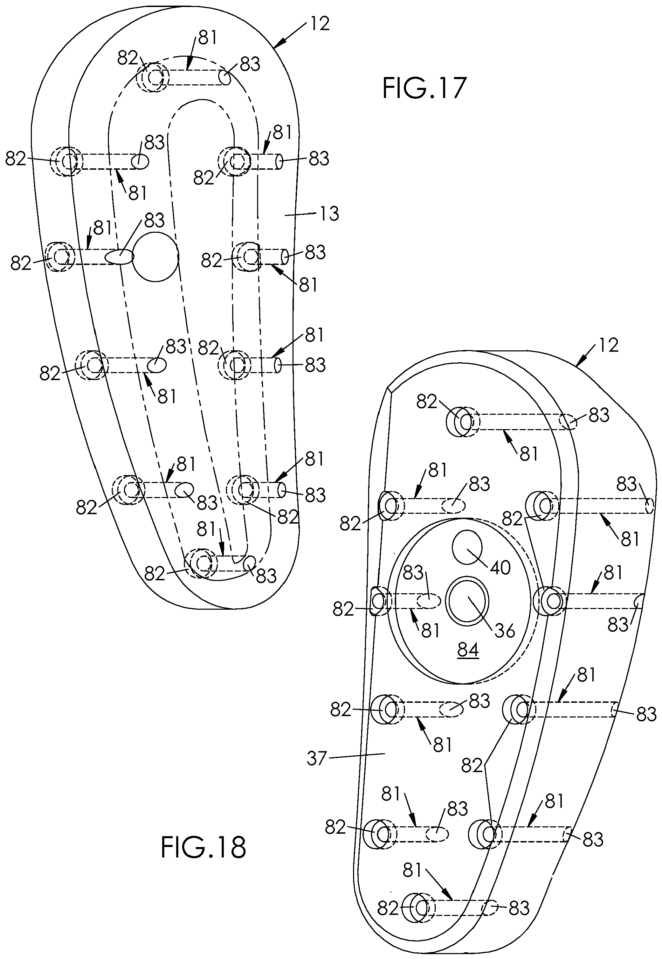

Dans ce cas, et comme cela est bien visible sur la **FIG.18**, le (ou chaque) canal **81** débouche sur la face **37** arrière de l'insert **12**.

Selon un mode de réalisation illustré sur les **FIG.17** et **FIG.18**, l'insert comprend une pluralité de canaux **81**. Ces canaux **81** sont avantageusement répartis autour de la tige **34** lorsque celle-ci est fixée sur l'insert **12**. Dans l'exemple illustré, où l'insert **12** est pourvu d'un lamage **84** dans lequel est emboîtée la tige **34**, on voit que les canaux **81** sont répartis autour de ce lamage **84**.

Deuxièmement, la demi-chambre **22B** avant est en communication fluidique avec le logement **9**.

A cet effet, la tige **34** est cannelée, c'est-à-dire qu'elle est pourvue de cannelures **85** pratiquées dans sa face externe parallèlement à son axe (parallèlement à l'axe **T**).

Ces cannelures **85** facilitent la communication fluidique entre la demi-chambre **22B** avant et le logement **9**.

Ces dispositions permettent de réaliser, via la demi-chambre **22B** avant, les cannelures **85**, le logement **9** et le canal (ou les canaux) **81**, une circulation de fluide (c'est-à-dire d'air si le fluide employé est de l'air) qui :

- favorise le refroidissement (ou la régulation thermique) de l'insert **12**,
- facilite le refroidissement de la matière du récipient **2** ainsi que son décollement de la face **13** frontale de l'insert **12** lors du retrait de celui-ci.

Cette circulation de fluide est réalisée lors de l'injection de fluide dans la demi-chambre **22B** avant commandant le mouvement de retrait du piston **17** (et donc de l'insert **12**) : une partie du fluide injecté fuit dans le logement **9** via les cannelures **85** et s'introduit dans le canal (les canaux) **81** par l'extrémité **82** arrière pour déboucher sur la face **13** frontale par l'extrémité **83** avant, comme illustré par les flèches dans le médaillon de détail de la **FIG.16.**

En limitant l'échauffement de l'insert **12**, alors même que la paroi **6** latérale du moule **5** est refroidie, on évite, d'une part, la montée de la température de l'insert au-dessus de la température de transition vitreuse (Tg) de la matière thermoplastique constitutive du récipient et, d'autre part, une dilatation de l'insert **12** qui empêcherait son bon coulissement dans le logement **9**. La lame d'air créée entre la face **13** frontale de l'insert **12** et le récipient **2** permet de préserver la forme de la réserve **3** en creux formée dans le récipient **2** par l'insert **12** dans sa position déployée.

Plus précisément, l'injection de fluide à basse pression dans la demi-chambre **22B** avant (et donc dans le logement **9**) est réalisée avant que l'injection de fluide à haute pression dans la demi-chambre **22A** arrière ne soit stoppée. La circulation de fluide sur la face **13** frontale de l'insert **12** débute donc avant le retrait de celui-ci. L'air circule par conséquent entre le récipient **2** soufflé et l'insert **12**, et assure un refroidissement de celui-ci.

La pression dans le récipient **2** est ensuite relâchée, puis la pression dans la demi-chambre **22A** arrière est également relâchée. La pression dans la demi-chambre **22B** avant étant maintenue, l'insert **12** est déplacé depuis sa position déployée vers sa position rétractée et ensuite, la pression dans la demi-chambre **22B** avant est relâchée.

Cette architecture, et le mode de fonctionnement qui vient d'être décrit, permet de simplifier la structure du moule puisque les conduits de pressurisation de la demi-chambre **22B** avant sont mis à profit pour assurer le refroidissement de l'insert **12**, ce qui évite de recourir à des dispositions dédiées (par ex. un conduit spécifique d'amenée de fluide caloporteur). Par ailleurs, comme le récipient **2** est mis à profit pour générer un effet de mur de guidage des flux d'air qui se répartissent en lame léchant la face **13** frontale, il en résulte une bonne efficacité du refroidissement. De la sorte, la température de l'insert **12** peut être maintenue constamment au-dessous de la température de transition vitreuse de la matière du récipient **2**.

## Revendications

1. Unité (**1**) de moulage pour le formage d'un récipient (**2**), cette unité (**1**) de formage comprenant :

   - un moule (**5**) muni d'une paroi (**6**) latérale définissant une cavité (**7**) à l'empreinte d'une partie du récipient (**2**),
   - un circuit (**60**) fluidique de régulation thermique de la paroi (**6**), qui inclut des canaux percés dans celle-ci, ce circuit (**60**) fluidique de régulation thermique s'étendant entre une ouverture (**62**) d'alimentation et une ouverture (**63**) d'évacuation ;

- un insert (**12**) ayant une face (**13**) frontale à l'empreinte d'une partie locale du récipient (**2**), mobile entre une position rétractée et une position déployée ;
- un actionneur (**16**) solidaire de l'insert (**12**) pour déplacer celui-ci de sa position rétractée à sa position déployée et réciproquement ;
- un circuit (**45**) pneumatique de commande de l'actionneur (**16**),

cette unité (**1**) de moulage étant **caractérisée en ce que** :

- le circuit (**60**) fluidique de régulation thermique de la paroi (**6**) débouche, par l'ouverture (**62**) d'alimentation et l'ouverture (**63**) d'évacuation, sur une face (**48**) supérieure du moule,
- le circuit pneumatique de commande comprend au moins un conduit (**46**) primaire percé dans la paroi (**6**) du moule (**5**) et débouchant, par une extrémité (**47**) amont, sur la face (**48**) supérieure du moule (**5**).

2. Unité (**1**) de moulage selon la revendication 1, **caractérisée en ce qu'**elle comprend un raccord (**64**) fluidique monté sur la face (**48**) supérieure du moule (**5**), ce raccord (**64**) fluidique incluant une arrivée (**65**) fluidique en communication avec l'ouverture (**62**) d'alimentation et une sortie (**66**) fluidique en communication avec l'ouverture (**63**) d'évacuation.

3. Unité (**1**) de moulage selon la revendication 2, **caractérisée en ce que** le moule (**5**) comprend une gorge (**67**) creusée dans la face (**48**) supérieure, qui s'étend d'une extrémité (**68**) externe au droit de l'ouverture (**63**) d'évacuation à une extrémité (**69**) interne au voisinage de l'ouverture (**62**) d'alimentation.

4. Unité (**1**) de moulage selon l'une des revendications 1 à 3, **caractérisée en ce qu'**elle comprend un raccord (**53**) pneumatique monté sur la paroi (**48**) supérieure du moule (**5**), et qui comprend une arrivée (**54**) primaire en communication avec l'extrémité (**47**) amont du conduit (**46**) primaire.

5. Unité (**1**) de moulage selon l'une des revendications précédentes, **caractérisée en ce que** le circuit (**45**) pneumatique de commande de l'actionneur (**16**) comprend un conduit (**50**) secondaire percé dans la paroi (**6**) du moule (**5**) et débouchant, par une extrémité (**51**) amont, sur la face (**48**) supérieure du moule (**5**).

6. Unité (**1**) de moulage selon les revendications 4 et 5, prises en combinaison, **caractérisée en ce que** le raccord (**53**) pneumatique comprend une arrivée (**56**) secondaire en communication avec l'extrémité (**51**) amont du conduit (**50**) secondaire.

7. Unité (**1**) de moulage selon la revendication 6, **caractérisée en ce que** l'arrivée (**54**) primaire du raccord (**53**) pneumatique est reliée à une source de fluide à pression élevée, et l'arrivée (**56**) secondaire à une source de fluide à pression comparativement plus faible.

8. Unité (**1**) de moulage selon la revendication 7, **caractérisée en ce que** la pression élevée est supérieure à 20 bars.

9. Unité (**1**) de moulage selon la revendication 7 ou la revendication 8, **caractérisée en ce que** la pression plus faible est inférieure ou égale à 12 bars.

10. Unité (**1**) de moulage selon l'une des revendications 4 à 9, **caractérisée en ce qu'**elle comprend un couvercle (**59**) monté sur la face (**48**) supérieure du moule (**5**) et interposé entre celle-ci et chaque raccord (**53**, **64**), ce couvercle (**59**) étant pourvu de perçages (**70**, **71**, **72**, **73**) de mise en communication de chaque raccord (**53**, **64**) avec son circuit (**45**, **60**) respectif.

**Patentansprüche**

1. Formeinheit (1) zum Formen eines Behälters (2), wobei diese Formeinheit (1) umfasst:

- ein Formwerkzeug (5), das mit einer Seitenwand (6) versehen ist, die einen Hohlraum (7) mit dem Formabdruck eines Teils des Behälters (2) definiert,
- einen Fluidkreislauf (60) zur Wärmeregelung der Wand (6), welcher Kanäle aufweist, die in dieser gebohrt sind, wobei sich dieser Fluidkreislauf (60) zur Wärmeregelung zwischen einer Zuführöffnung (62) und einer Ablauföffnung (63) erstreckt;
- einen Einsatz (12), der eine Vorderseite (13) mit dem Formabdruck eines lokalen Teils des Behälters (2) aufweist und zwischen einer zurückgezogenen Position und einer ausgefahrenen Position beweglich ist;
- einen Aktuator (16), der mit dem Einsatz (12) fest verbunden ist, um diesen von seiner zurückgezogenen Position zu seiner ausgefahrenen Position und umgekehrt zu verlagern;
- einen Pneumatikkreis (45) zur Steuerung des Aktuators (16),

wobei diese Formeinheit (1) **dadurch gekennzeichnet ist, dass**:

- der Fluidkreislauf (60) zur Wärmeregelung der Wand (6) über die Zuführöffnung (62) und die Auslassöffnung (63) auf einer oberen Fläche (48) des Formwerkzeugs mündet,
- der Pneumatikkreis wenigstens eine primäre Leitung (46) aufweist, die in der Wand (6) des Formwerkzeugs (5) gebohrt ist und über ein stromaufwärtiges Ende (47) auf der oberen Fläche (48) des Formwerkzeugs (5) mündet.

2. Formeinheit (1) nach Anspruch 1, **dadurch gekennzeichnet, dass** sie eine Fluidkupplung (64) umfasst, die auf der oberen Fläche (48) des Formwerkzeugs (5) angebracht ist, wobei diese Fluidkupplung (64) einen Fluideinlass (65), der mit der Zuführöffnung (62) in Verbindung steht, und einen Fluidauslass (66), der mit der Ablauföffnung (63) in Verbindung steht, aufweist.

3. Formeinheit (1) nach Anspruch 2, **dadurch gekennzeichnet, dass** das Formwerkzeug (5) eine in der oberen Fläche (48) ausgebildete Rille (67) umfasst, welche sich von einem äußeren Ende (68) direkt bei der Ablauföffnung (63) zu einem inneren Ende (69) in der Nähe der Zuführöffnung (62) erstreckt.

4. Formeinheit (1) nach einem der Ansprüche 1 bis 3, **dadurch gekennzeichnet, dass** sie eine Druckluftkupplung (53) umfasst, die auf der oberen Wand (48) des Formwerkzeugs (5) angebracht ist und die eine primäre Einströmöffnung (54) umfasst, die mit dem stromaufwärtigen Ende (47) der primären Leitung (46) in Verbindung steht.

5. Formeinheit (1) nach einem der vorhergehenden Ansprüche, **dadurch gekennzeichnet, dass** der Pneumatikkreis (45) zur Steuerung des Aktuators (16) eine sekundäre Leitung (50) umfasst, die in der Wand (6) des Formwerkzeugs (5) gebohrt ist und über ein stromaufwärtiges Ende (51) auf der oberen Fläche (48) des Formwerkzeugs (5) mündet.

6. Formeinheit (1) nach den Ansprüchen 4 und 5 in Kombination, **dadurch gekennzeichnet, dass** die Druckluftkupplung (53) eine sekundäre Einströmöffnung (56) umfasst, die mit dem stromaufwärtigen Ende (51) der sekundären Leitung (50) in Verbindung steht.

7. Formeinheit (1) nach Anspruch 6, **dadurch gekennzeichnet, dass** die primäre Einströmöffnung (54) der Druckluftkupplung (53) mit einer Quelle von unter erhöhtem Druck stehenden Fluid verbunden ist und die sekundäre Einströmöffnung (56) mit einer Quelle von unter vergleichsweise niedrigerem Druck stehenden Fluid verbunden ist.

8. Formeinheit (1) nach Anspruch 7, **dadurch gekennzeichnet, dass** der erhöhte Druck höher als 20 bar ist.

9. Formeinheit (1) nach Anspruch 7 oder Anspruch 8, **dadurch gekennzeichnet, dass** der niedrigere Druck niedriger als oder gleich 12 bar ist.

10. Formeinheit (1) nach einem der Ansprüche 4 bis 9, **dadurch gekennzeichnet, dass** sie eine Abdeckung (59) umfasst, die auf der oberen Wand (48) des Formwerkzeugs (5) angebracht und zwischen dieser und den beiden Kupplungen (53, 64) angeordnet ist, wobei diese Abdeckung (59) mit Bohrungen (70, 71, 72, 73) zur Herstellung einer Verbindung jeder Kupplung (53, 64) mit ihrem jeweiligen Kreis (45, 60) versehen ist.

**Claims**

1. Moulding unit (1) for forming a container (2), this moulding unit (1) comprising:

- a mould (5) provided with a side wall (6) defining a cavity (7) in the imprint of a part of the container (2);
- a fluid circuit (60) for thermal regulation of the wall (6) that includes channels drilled in same, this fluid circuit (60) for thermal regulation extending between a supply opening (62) and an evacuation opening (63);
- an insert (12) having a front surface (13) in the imprint of a local part of the container (2), mobile between a retracted position and a deployed position;

- an actuator (16) integral with the insert (12) for moving same from its retracted position to its deployed position, and reciprocally;
- a pneumatic circuit (45) for controlling the actuator (16),

this moulding unit (1) being **characterized in that**:

- the fluid circuit (60) for thermal regulation of the wall (6) leads, through the supply opening (62) and the evacuation opening (63), onto an upper surface (48) of the mould,
- the pneumatic control circuit comprises at least one primary conduit (46) drilled in the wall (6) of the mould (5) and leading, through an upstream end (47), onto the upper surface (48) of the mould (5) .

2. Moulding unit (1) according to Claim 1, **characterized in that** it comprises a fluid coupling (64) assembled on the upper surface (48) of the mould (5), this fluid coupling (64) including a fluid inlet (65) in communication with the supply opening (62) and a fluid outlet (66) in communication with the evacuation opening (63).

3. Moulding unit (1) according to Claim 2, **characterized in that** the mould (5) comprises a groove (67) hollowed out in the upper surface (48), said groove extending from an outer end (68) at the level of the evacuation opening (63) to an inner end (69) in the vicinity of the supply opening (62).

4. Moulding unit (1) according to one of Claims 1 to 3, **characterized in that** it comprises a pneumatic coupling (53) assembled on the upper surface (48) of the mould (5), and that comprises a primary inlet (54) in communication with the upstream end (47) of the primary conduit (46).

5. Moulding unit (1) according to one of the preceding claims, **characterized in that** the pneumatic circuit (45) for controlling the actuator (16) comprises a secondary conduit (50) drilled in the wall (6) of the mould (5) and leading, through an upstream end (51), onto the upper surface (48) of the mould (5).

6. Moulding unit (1) according to Claims 4 and 5, taken as combined, **characterized in that** the pneumatic coupling (53) comprises a secondary inlet (56) in communication with the upstream end (51) of the secondary conduit (50).

7. Moulding unit (1) according to Claim 6, **characterized in that** the primary inlet (54) of the pneumatic coupling (53) is connected to a source of fluid at high pressure, and the secondary inlet (56) to a source of fluid at comparatively lower pressure.

8. Moulding unit (1) according to Claim 7, **characterized in that** the high pressure is greater than 20 bars.

9. Moulding unit (1) according to Claim 7 or Claim 8, **characterized in that** the lower pressure is less than or equal to 12 bars.

10. Moulding unit (1) according to one of Claims 4 to 9, **characterized in that** it comprises a cover (59) assembled on the upper surface (48) of the mould (5) and interposed between same and each coupling (53, 64), this cover (59) being provided with drilled holes (70, 71, 72, 73) for providing communication of each coupling (53, 64) with its respective circuit (45, 60).

FIG.1

FIG.2

FIG.3

FIG.4

48
51
62
50
61A
45
7,7B
52
15
10
43
9
42
32
19
5,5B
6

FIG.5

FIG.7

FIG.6

FIG.8

FIG.9

FIG.10

FIG.11

FIG.12

FIG.13

FIG.14

EP 3 272 495 B1

FIG.15

FIG.16

FIG.17

FIG.18

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010063900 A
- EP 2106898 A
- US 8348658 B
- US 8721957 A2
- US 2014263160 A1